# EUROPÄISCHE PATENTSCHRIFT

(11) **EP 1 282 628 B1**
(45) Veröffentlichungstag und Bekanntmachung des Hinweises auf die Patenterteilung: **11.02.2004**
(21) Anmeldenummer: 01940411.0
(22) Anmeldetag: 07.05.2001
(51) Int. Cl.: C07F 9/22

(54) **N- (2-PYRIMIDINYL) (THIO)PHOSPHORSÄURETRIAMIDE, VERFAHREN ZU IHRER HERSTELLUNG, UND DEREN VERWENDUNG ALS MITTEL ZUR REGULIERUNG BZW. HEMMUNG DER ENZYMATISCHEN HARNSTOFF-HYDROLYSE**
N-(2-PYRIMIDINYL)(THIO)PHOSPHORIC TRIAMIDES, METHOD FOR PRODUCING THE SAME, AND THE USE THEREOF AS AGENTS FOR REGULATING OR INHIBITING ENZYMATIC UREA HYDROLYSIS
TRIAMIDES D'ACIDE N-(2-PYRIMIDINYL)(THIO)PHOSPHORIQUE, LEUR PROCEDE DE PRODUCTION, ET LEUR UTILISATION COMME AGENTS DE REGULATION OU D'INHIBITION DE L'HYDROLYSE ENZYMATIQUE DE L'UREE

(30) Priorität: 18.05.2000 DE 10024622
(43) Veröffentlichungstag der Anmeldung: 12.02.2003
(73) Patentinhaber: SKW STICKSTOFFWERKE PIESTERITZ GmbH, 06886 Lutherstadt Wittenberg (DE)
(72) Erfinder: HUCKE, André, 06886 Lutherstadt Wittenberg (DE); NICLAS, Hans-Joachim, 12435 Berlin (DE); MICHEL, Hans-Jürgen, 04827 Machern (DE); KRISTOF, Wolfgang, 06886 Lutherstadt Wittenberg (DE); WOZNIAK, Hartmut, 04451 Cunnersdorf (DE)
(74) Vertreter: Schneider, Michael
(86) Internationale Anmeldenummer: PCT/EP2001/005149
(87) Internationale Veröffentlichungsnummer: WO 2001/087898

(56) Entgegenhaltungen:
- US-A- 4 518 413
- US-A- 4 530 714

## Beschreibung

Die vorliegende Erfindung betrifft N-(2-Pyrimidinyl)(thio)-phosphorsäuretriamide, Verfahren zu deren Herstellung, Düngemittelzusammensetzungen, die sie enthalten, und ihre Verwendung zur Regulierung bzw. Hemmung der enzymatischen Harnstoffhydrolyse im Rahmen der Vermeidung von Stickstoffverlusten bei der Anwendung harnstoffbasierter Düngemittel sowie zur Reduzierung der Ammoniaklast in Tierställen infolge einer weitestgehenden Ausschaltung der Harnstoffhydrolyse.

Harnstoff ist ein ursprünglich biogenes Stoffwechselprodukt, das durch das Enzym Urease in Ammoniak und Kohlendioxid gespalten wird. Die Reaktion verläuft außerordentlich schnell und effektiv und ist somit für N-Verluste bei der Anwendung von harnstoffbasierten Düngemitteln verantwortlich, zumal dann, wenn der Boden nicht über eine ausreichende Sorptionskraft verfügt, um das frei gewordene Ammoniak in Form von Ammoniumionen zu binden.. Dadurch gehen der Landwirtschaft jährlich beträchtliche Mengen an Stickstoff verloren, die auf diese Weise zur Umweltbelastung beitragen und andererseits einen erhöhten Düngemittelbedarf erfordern.

Andererseits können unter ungünstigen Klimabedingungen und/oder bei Ausbringung auf leichte Böden spontan hohe Ammoniakkonzentrationen im Boden auftreten, die dann zusätzlich die Keimung bzw. das Auflaufen der Jungpflanzen beeinträchtigen.

Bedenkt man, dass Harnstoff dasjenige Stickstoff düngemittel verkörpert, das prozentual über den größten N-Gehalt verfügt sowie weltweit mit Abstand der dominierende N-Dünger ist, wird die Suche nach praktikablen Lösungen zur Reduzierung der ureasebedingten N-Verluste verständlich. Um dieses Ziel zu erreichen, ist eine Vielzahl von Lösungen vorgeschlagen worden. Zu nennen sind in diesem Zusammenhang die saure Umhüllung von Harnstoffprills bzw. -granalien, um auf diese Weise entstehenden Ammoniak durch Salzbildung abfangen zu können oder das Coating mit Substanzen, wodurch Harnstoff verlangsamt so freigesetzt wird, dass der entstehende Ammoniak problemlos "abgepuffert" werden kann.

Im gleichen Sinne verursacht die ureasekatalysierte Harnstoffhydrolyse durch Spaltung des in Kot und vor allem in Harn befindlichen Harnstoffs in Tierställen zum Teil erhebliche Ammoniaklasten, die, abgesehen von einer Geruchsbelästigung bei entsprechend hoher Konzentration, die Entwicklung bzw. das Wachstum der Tiere negativ beeinflussen. Vorgenannte, für die Harnstoffdüngung zumindest noch vorstellbare Lösungen scheiden im Tierstall aus. Dagegen erscheint der Einsatz solcher Substanzen aussichtsreich, die zu einer Ureasehemmung führen, wobei sich deren Anwendung selbstverständlich auch für Düngungszwecke anbietet. Durch den Einsatz von Ureaseinhibitoren wird eine effektive Möglichkeit aufgezeigt, die unter Normalbedingungen außerordentlich schnell verlaufende enzymatische Harnstoffhydrolyse deutlich zu verlangsamen. Vermittels der Verzögerung dieser Enzymreaktion kann der Düngeharnstoff unzersetzt in tiefere Bodenschichten penetrieren.

Damit sind Ammoniakverluste durch das Sorptionspotential der darüber befindlichen Bodenschichten anders als an der Bodenoberfläche nahezu ausgeschlossen. Außerdem gelingt es auf diesem Wege, Harnstoff selbst bzw. harnstoffhaltige Dünger für leichte Bodenstandorte verlustfrei zur Anwendung zu bringen.

Aus der Literatur ist bekannt, dass bestimmte organische, aber auch anorganische Verbindungen die ureasekatalysierte Harnstoffhydrolyse zu hemmen vermögen (vgl. Pharmazie 35 (1980), 63-68) .

Mit der Entdeckung der Phosphorsäureesterdiamide (DD 122177) sind Verbindungen bekannt geworden, die äußerst effektive Ureaseinhibitoren darstellen. Ähnlich wirksam ist eine Reihe von Derivaten des Phosphorsäuretriamids einschließlich des Grundkörpers (vgl. bspw. US 4,540,428, US 4,676,822, US 4,696,693, US 4,537,614, US 4,517,004).

In US-A-4,518,413 wird die Verbindung N,O-Bis(diaminophosphinyl)-2-amino-4-hydroxy-6-methylpryrimidine als Ureaseinhibitor und zur Verwendung in Düngemittelzusammensetzungen beschrieben.

Bei genauer Prüfung dieser Substanzen wird jedoch augenscheinlich, dass sie relativ hydrolyseanfällig sind, wodurch vor allem ihre Wirkungsdauer und somit ihre Anwendbarkeit erheblich eingeschränkt ist. Zum anderen sind sie teilweise nur in geringer Ausbeute oder mittels aufwendiger Herstellungsverfahren erhältlich, so dass eine vertretbare Ökonomie nicht gegeben ist.

Weitere, die Anwendung der erwähnten Verbindungen beeinflussende Nachteile sind deren unterschiedliches Migrationsverhalten zu Harnstoff, infolgedessen es zu einer Auftrennung zwischen Inhibitor und Substrat Harnstoff kommt und vor allem im Falle der größeren Beweglichkeit der Harnstoffmoleküle keine oder nur eine unzureichende Enzymhemmung eintritt.

Der vorliegenden Erfindung liegt daher die Aufgabe zugrunde, solche Mittel für die Praxis zur Verfügung zu stellen, die in der Lage sind, bei Anwendung mit Düngeharnstoff oder anderen harnstoffbasierten Düngern, wozu insbesondere organische oder mineralische Dünger zählen, die ureasekatalysierte Harnstoffhydrolyse auf ein solches Maß zu beschränken, dass daraus resultierende Verluste an Düngerstickstoff, solange sich dieser auf bzw. in der Bodenoberfläche befindet, in Form von Ammoniak nahezu auszuschließen sind bzw. die Ammoniaklast in Tierställen durch spontane Zersetzung des Harnstoffs derart zu reduzieren, dass die damit verbundenen Nachteile nicht wirksam werden können.

Diese Aufgabe wird erfindungsgemäß durch die Bereitstellung der N-(2-Pyrimidinyl)(thio)phosphorsäuretriamide entsprechend Anspruch 1 gelöst.

Es hat sich nämlich überraschenderweise gezeigt, dass die erfindungsgemäßen Verbindungen äußerst effektive Ureaseinhibitoren mit einer sehr guten Hydrolysebeständigkeit darstellen und außerdem technisch problemlos und kostengünstig herstellbar sind.

Die N-(2-Pyrimidinyl)(thio)phosphorsäuretriamide gemäß der vorliegenden Erfindung entsprechen der allgemeinen Formel I 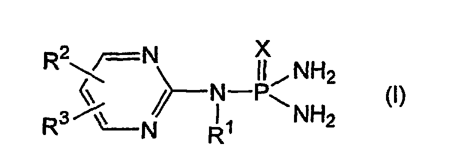 in der
X = Sauerstoff oder Schwefel,
R¹ = Wasserstoff, C₁-C₈-Alkyl oder C₆-C₁₀-Aryl und
R², R³ unabhängig voneinander Wasserstoff, Alkyl, Aryl, Aralkyl, Alkoxy, Halogen, Alkylthio, Alkylamino, Dialkylamino, Cyano, Nitro, wobei die Alkylreste 1-8 C-Atome, die Arylreste 6-10 C-Atome und die Aralkylreste 7-18 C-Atome aufweisen und ggf. substituiert sein können,
bedeuten.

Die Alkyl- und Arylreste können ggf. noch einen oder mehrere Rest(e) wie Halogen (F, Cl, Br, I), Cyano, C₁-C₄-Alkylthio, C₁-C₄-Alkoxy-, C₁-C₄-Dialkylamino- oder die Nitro-Gruppe als Substituenten aufweisen.

Bevorzugte N-(2-Pyrimidinyl)phosphorsäuretriamide der vorliegenden Erfindung entsprechen der allgemeinen Formel (II)

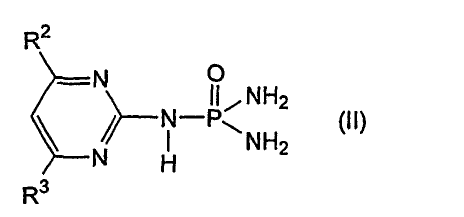

Bevorzugt bedeuten R² und R³ in Formel (I) und (II) unabhängig voneinander -H, -CH₃, -OCH₃ oder -Cl.

Die erfindungsgemäßen Verbindungen sind analog bekannter Verfahren zugänglich, wobei X, R¹, R² und R³ die oben beschriebene Bedeutung besitzen. Vorzugsweise erfolgt die Herstellung der (Thio-)Phosphorsäuretriamide in der Weise, dass man
a₁) Phosphorpentachlorid (PCl₅) mit einem 2-Aminopyrimidin in annähernd äquimolarem Verhältnis in einem inerten organischen Lösemittel und unter Schutzgasatmosphäre bei 0 bis 60 °C entsprechend Gleichung (1) zu Verbindungen des Typs (A) reagieren lässt, welche ohne weitere Isolation mit einer annähernd äquimolaren Menge an Ameisensäure und ggf. mit Phosphorpentasulfid zu (Thio-)Phosphorsäureamiddichloriden des Typs (B) umgesetzt werden (vgl. I. N. Zhmurova, A. V. Kirsanov Zh. Obshch. Khim. 30, 4048 (1960)). 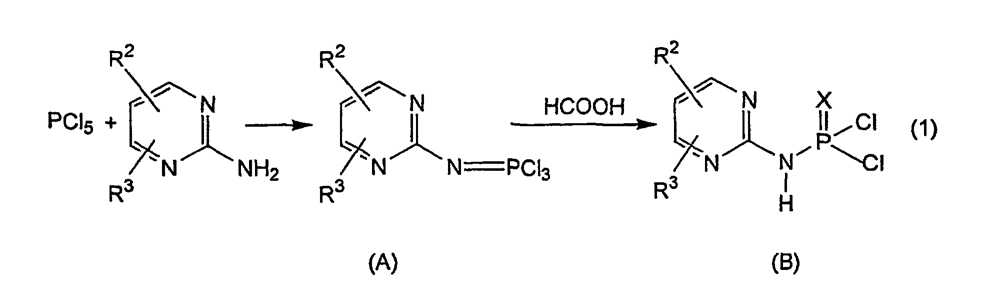 oder
a₂) 2-Aminopyrimidine oder deren Hydrochloride mit einem Überschuss Phosphoroxychlorid (POCl₃) oder Phosphorthiochlorid (PSCl₃) bei Temperaturen von 80 bis 120 °C entsprechend Gleichung (2) zu Phosphorsäureamiddichloriden des Typs (B) umsetzt (vgl. A. A. Kropacheva, N. V. Sagonov Zh. Obshch. Khim. 31, 3601 (1961)). 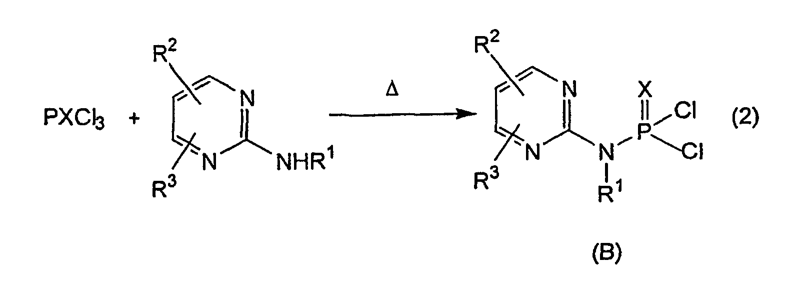 und anschließend
b) die in Stufe a₁) oder a₂) gebildeten Verbindungen des Typs B mit Ammoniak ggf. in einem organischen Lösemittel bei Temperaturen von -80 bis 20 °C entsprechend Gleichung (3) zum gewünschten Endprodukt reagieren lässt.

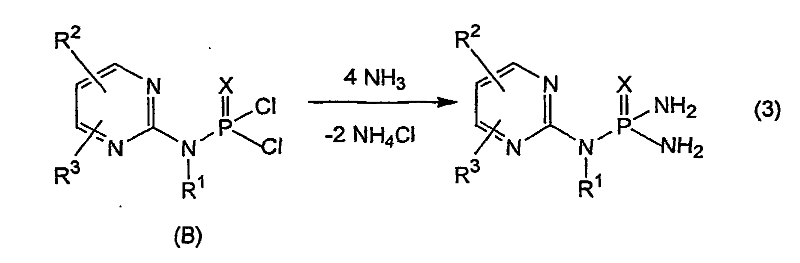

Als organisches Lösemittel wird in Stufe a₁) vorzugsweise Chloroform und in Stufe b) bevorzugt Dichlormethan, Chloroform, Diethylether oder THF verwendet. Es hat sich als besonders vorteilhaft erwiesen, die Reaktionsstufe a₁) unter einer Schutzgasatmosphäre bestehend aus Stickstoff oder Argon durchzuführen.

Schwefelhaltige Verbindungen erhält man durch Umsetzug von Phosphorthiochlorid (PSCl₃) mit dem entsprechenden 2-Aminopyrimidin (vgl. G. Olah, A. Oswald Liebigs Ann. Chem. 625, 92 (1959)) oder Schwefelung der Phosphorsäureamiddichloride (B) mit Phosphorpentasulfid (Umwandlung der O=P-Bindung in eine S=P-Bindung), vgl. N. N. Godovikov, M. I. Kabachnik Zh. Obshch. Khim. 31, 1628 (1961).

Die erfindungsgemäßen N-(2-Pyrimidinyl) (thio)phosphorsäuretriamide weisen eine für praktische Belange ausreichende Dauerwirkung hinsichtlich ihres Inhibitorpotentials auf, wodurch sie befähigt sind, die enzymatische Harnstoffhydrolyse so zu verlangsamen bzw. vorübergehend auszuschalten, dass Ammoniakverluste im Rahmen von Düngungsmaßnahmen unter Verwendung organischer und/oder mineralischer harnstoffhaltiger Stickstoffdünger auf ein Minimum reduziert werden bzw. das Auftreten schädlicher oder lästiger Ammoniakkonzentrationen ausgeschlossen wird.

Dabei ist es unerheblich, ob sich die Wirkung der erfindungsgemäßen Mittel auf Düngungsmaßnahmen oder auf vorbeugende Maßnahmen zur Vermeidung hoher Ammoniakkonzentrationen in Tierställen erstreckt.

Zusammensetzungen umfassend mindestens ein Düngemittel in Verbindung mit den erfindungsgemäßen N-(2-Pyrimidinyl)(thio)-phosphorsäuretriamiden sind ein weiterer Gegenstand der Erfindung. Die erfindungsgemäßen Verbindungen werden vorzugsweise gemeinsam mit carbamidhaltigen Düngemitteln vorzugsweise in einer Menge von 0,1 bis 30 Gew.-% bezogen auf das Gewicht des harnstoffbasierten Düngemittels ausgebracht bzw. den in Tierställen anfallenden tierischen Ausscheidungen zugesetzt. Dabei ist es unwesentlich, ob sie oberflächig vorher auf den Dünger aufgebracht, darin inkorporiert, gemeinsam oder in vertretbarem Zeitraum getrennt von harnstoffhaltigen Düngemitteln ausgebracht werden.

Die nachfolgenden Beispiele erläutern die Erfindung, ohne sie einzuschränken.

### Beispiele

### Beispiel 1

### Prüfung auf ureasehemmende Wirkung

30 g auf 40 % der maximalen Wasserkapazität eingestellter Boden werden mit 1 ml Harnstofflösung entsprechend 50 mg Harnstoff versetzt. Parallel hierzu erfolgt die Applikation des Wirkstoffes, vorzugsweise in Wasser gelöst. Die Konzentrationsangaben für die einzelnen geprüften Wirkstoffe beziehen sich in den nachfolgenden Tabellen auf ihren prozentualen Anteil, bezogen auf die im Test verwendete Menge an Carbamidstickstoff. Das Ganze befindet sich in einem luftdicht verschlossenen Gefäß, in das gleichzeitig eine Vorlage eingebracht wird, die den aus dem Harnstoff freigesetzten Ammoniak als Ammonium auffängt, dessen Gehalt anschließend bestimmt wird.
Aus der kumulativen Bestimmung der Ammoniumkonzentration in der Vorlage wird die prozentuale Hemmung in Abhängigkeit von der Zeit berechnet bzw. aus diesen Werten der t₅₀-Wert rechnerisch ermittelt.
Als t₅₀-Wert wird dabei diejenige Zeit in Tagen definiert, in der 50 % der eingesetzten Harnstoffmenge durch das Enzym Urease umgesetzt werden.

Tabelle 1 gibt einen Überblick über die nach dieser Methode ermittelten Hemmdaten einiger ausgewählter erfindungsgemäßer Verbindungen.

**Tabelle 1:**

| Ureasehemmung (%) nach Tagen durch N-(2-Pyrimidinyl)phosphorsäuretriamide | | | | | | |
|---|---|---|---|---|---|---|
| Nr. | Struktur R¹ | R² | R³ | Konz. % HS-N-bez. | t₅₀-Wert¹⁾ (d) | K-Wert |
| 1 | H | H | H | 0,1 | 9 | 1,29 |
| 2 | H | 4-CH₃ | H | 0,1 | 7,5 | 1,07 |
| 3 | H | 4-CH3 | 6-CH₃ | 0,1 | 6,4 | 0,91 |
| 4 | H | 4-Cl | 6-CH₃ | 0,1 | 6,9 | 0,99 |
| 5 | H | 4-Cl | 6-Cl | 0,1 | 5,9 | 0,84 |
| 6 | H | 4-OCH₃ | 6-CH₃ | 0,1 | 4,8 | 0,69 |

| | | | | | | |
|---|---|---|---|---|---|---|
| ¹⁾ Alle Werte auf Standardwirkung PPDA (t₅₀-Wert = 7 Tage) über K-Wert vereinheitlicht (Ursache: verschiedene Serien mit unterschiedlichem t₅₀-Wert für Standard) | | | | | | |

Nachfolgend werden die Synthesen repräsentativer Verbindungen beschrieben, ohne auf diese Beispiele und Verfahren beschränkt zu sein.

### Beispiel 2

### N-(2-Pyrimidinyl)phosphorsäuretriamid (Verbindung Nr. 1)

Variante A: Unter Inertgas werden 10 g (0,105 mol) 2-Aminopyrimidin in 40 ml Chloroform suspendiert und anschließend 21,9 g (0,105 mol) PCl₅ zugegeben. Man lässt 15 min bei Raumtemperatur rühren und erhitzt danach 3 h unter Rückfluss. Das Reaktionsgemisch wird auf 5 bis 10 °C abgekühlt und 105 mmol Ameisensäure zugetropft. Man lässt 30 min nachrühren, saugt den ausgefallenen Feststoff ab und wäscht mit wenig Chloroform und mehrmals mit Ether. Nach Trocknen erhält man 17,5 g (78 %) 2-Pyrimidinylphosphorsäureamiddichlorid (Fp 180-185 °C). Das Rohprodukt wird ohne weitere Reinigung zur Aminierung eingesetzt.

In 80 ml Ether werden bei -70 bis -40 °C ca. 80 ml Ammoniak einkondensiert. Unter Rühren fügt man bei ca. -60 °C portionsweise 17,5 g (0,083 mol) 2-Pyrimidinylphosphorsäureamiddichlorid zu. Nach 2 h bei -30 °C lässt man über Nacht bei Raumtemperatur den Ammoniak abdampfen. Der ausgefallene Feststoff wird abgesaugt und 2 h mit 30 ml Diethylamin und 300 ml Chloroform ausgekocht. Der Rückstand wird abfiltriert und mit Methanol ausgekocht. Nach Abkühlen saugt man das Triamid ab und trocknet. Durch Einengen des MeOH erhält man weiteres Produkt.

Ausbeute: 11 g (76 %, Fp 215-220 °C Zers.); ¹³C-NMR (D₂O): δ[ppm] = 114,6; 158,6 (d, J = 1,2 Hz); 159,0 (d, J = 4,4 Hz); ¹H-NMR (D₂O): δ[ppm] = 8,49 (d, 2H, J = 5,0 Hz); 7,05 (t, 1H, J = 5,0 Hz); ³¹P-NMR (D₂O): δ[ppm] = 14,89

Variante B: 10,5 g (0,08 mol) 2-Aminopyrimidinhydrochlorid werden in 50 ml POCl₃ suspendiert und 3 h unter Rückfluss und Inertgas erhitzt. Nach Rühren über Nacht wird abgesaugt, mit Ether gewaschen und getrocknet (13,4 g, 79 %, Fp 175-180 °C).

Das 2-Pyrimidinylphosphorsäureamiddichlorid wird auf die unter Variante A beschriebene Weise mit Ammoniak umgesetzt (5,4 g, 50 %, Fp 198-200 °C Zers.).

### Beispiel 3

### N-(4-Methyl-2-pyrimidinyl)phosphorsäuretriamid (Verbindung Nr. 2)

Unter Inertgas werden 10 g (0,092 mol) 2-Amino-4-methylpyrimidin in 40 ml Chloroform suspendiert und anschließend 19,2 g (0,092 mol) PCl₅ zugegeben. Man lässt 15 min bei Raumtemperatur rühren und erhitzt danach 3 h unter Rückfluss. Das Reaktionsgemisch wird auf 5 bis 10 °C abgekühlt und 92 mmol Ameisensäure zugetropft. Man lässt 30 min nachrühren, saugt den ausgefallenen Feststoff ab und wäscht mit Ether. Nach Trocknen erhält man 17,7 g (85 %) 4-Methyl-2-pyrimidinylphosphorsäureamiddichlorid (Fp 140-150 °C Zers.). Das Rohprodukt wird ohne weitere Reinigung zur Aminierung eingesetzt.

In 80 ml Ether werden bei -70 bis -40 °C ca. 80 ml Ammoniak einkondensiert. Unter Rühren fügt man bei ca. -60 °C portionsweise 17,7 g (0,0783 mol) 4-Methyl-2-pyrimidinylphosphorsäureamiddichlorid zu. Nach 2 h bei -30 °C lässt man über Nacht bei Raumtemperatur den Ammoniak abdampfen. Der ausgefallene Feststoff wird abgesaugt und 2 h mit 35 ml Diethylamin und 350 ml Chloroform ausgekocht. Der Rückstand wird abfiltriert und mit Methanol ausgekocht. Nach Abkühlen saugt man das Triamid ab und trocknet. Durch Einengen des MeOH erhält man weiteres Produkt.

Ausbeute: 6,8 g (40 %, Fp 210-215 °C Zers.); ¹³C-NMR (D₂O): δ[ppm] = 23,1; 114,3; 157,7 (d, J = 1,1 Hz); 158,8 (d, J = 4,3 Hz); 169, 9 (d, J= 1,7 Hz) ; ¹H-NMR (D₂O): δ[ppm] = 8,30 (d, 1H, J = 5,2 Hz); 6,91 (d, 1H, J = 5,2 Hz); 2,43 (s, 3H); ³¹P-NMR (D₂O): δ[ppm] = 15,31

### Beispiel 4

### N-(4,6-Dimethyl-2-pyrimidinyl)phosphorsäuretriamid (Verbindung Nr. 3)

Unter Inertgas werden 5 g (0,04 mol) 2-Amino-4,6-dimethylpyrimidin in 20 ml Chloroform suspendiert und anschließend 18,4 g (0,04 mol) PCl₅ zugegeben. Man lässt 15 min bei Raumtemperatur rühren und erhitzt danach 3 h unter Rückfluss. Das Reaktionsgemisch wird auf 5 bis 10 °C abgekühlt und 40 mmol Ameisensäure zugetropft. Man lässt 30 min nachrühren, saugt den ausgefallenen Feststoff ab und wäscht mit Ether. Nach Trocknen erhält man 4,4 g (45 %) 4,6-Dimethyl-2-pyrimidinylphosphorsäureamiddichlorid (Fp 140 bis 150 °C Zers.). Das Rohprodukt wird ohne weitere Reinigung zur Aminierung eingesetzt.

In 20 ml Ether werden bei -70 bis -40 °C ca. 20 ml Ammoniak einkondensiert. Unter Rühren fügt man bei ca. -60 °C portionsweise 4,4 g (0,018 mol) 4,6-Dimethyl-2-pyrimidinylphosphorsäureamiddichlorid zu. Nach 2 h bei -30 °C lässt man über Nacht bei Raumtemperatur den Ammoniak abdampfen. Der ausgefallene Feststoff wird abgesaugt und 2 h mit 8 ml Diethylamin und 40 ml Chloroform ausgekocht. Der Rückstand wird abfiltriert und getrocknet.

Ausbeute: 0,6 g (16 %, Fp 270-275 °C Zers.); ¹³C-NMR (DMSOd₆): δ[ppm] = 23,4; 111,4; 160,0 (d, J = 3,8 Hz); 167,0 (d, J = 1,4 Hz); ¹H-NMR (DMSO-d₆): δ[ppm] = 7,89 (d, 2H, J = 7,9 Hz); 6,61 (s, 1H); 3,98 (s, 4H); 2,25 (s, 6H); ³¹P-NMR (DMSO-d₆): δ[ppm] = 13,70 (d, J = 7,1 Hz)

### Beispiel 5

### N-(4-Chlor-6-methyl-2-pyrimidinyl)phosphorsäuretriamid (Verbindung Nr. 4)

Unter Inertgas werden 6,5 g (0,045 mol) 2-Amino-4-chlor-6-methylpyrimidin in 20 ml Chloroform suspendiert und anschließend 9,4 g (0,045 mol) PCl₅ zugegeben. Man lässt 15 min bei Raumtemperatur rühren und erhitzt danach 3 h unter Rückfluss. Das Reaktionsgemisch wird auf 5-10 °C abgekühlt und 45 mmol Ameisensäure zugetropft. Man lässt 30 min nachrühren, saugt den ausgefallenen Feststoff ab und wäscht mit Ether. Nach Trocknen erhält man 9,7 g (83 %) 4-Chlor-6-methyl-2-pyrimidinylphosphorsäureamiddichlorid (Fp 170 bis 180 °C Zers.). Das Rohprodukt wird ohne weitere Reinigung zur Aminierung eingesetzt.

In 40 ml Ether werden bei -70 bis -40 °C ca. 40 ml Ammoniak einkondensiert. Unter Rühren fügt man bei ca. -60 °C portionsweise 9,7 g (0,037 mol) 4-Chlor-6-methyl-2-pyrimidinylphosphorsäureamiddichlorid zu. Nach 2 h bei -30 °C lässt man über Nacht bei Raumtemperatur den Ammoniak abdampfen. Der ausgefallene Feststoff wird abgesaugt, mit wenig Wasser und Methanol gewaschen und getrocknet.

Ausbeute: 3,7 g (45 %, Fp: 230-245 °C Zers.); ¹³C-NMR (DMSOd₆): δ[ppm] = 23,4; 111,1; 159,8 (d, J = 2,2 Hz) ; 160,1 (d, J = 3,7 Hz); 170,0; ¹H-NMR (DMSO-d₆): δ[ppm] = 8,41 (s, 1H); 6,88 (s, 1H); 4,04 (s, 4H); 2,32 (s, 3H); ³¹P-NMR (DMSO-d₆): δ[ppm] = 12,38

### Beispiel 6

### N-(4,6-Dichlor-2-pyrimidinyl)phosphorsäuretriamid (Verbindung Nr. 5)

Unter Inertgas werden 10 g (0,061 mol) 2-Amino-4,6-dichlorpyrimidin in 20 ml Chloroform suspendiert und anschließend 12,7 g (0,061 mol) PCl₅ zugegeben. Man lässt 15 min bei Raumtemperatur rühren und erhitzt danach 3 h unter Rückfluss. Das Reaktionsgemisch wird auf 5 bis 10 °C abgekühlt und 61 mmol Ameisensäure zugetropft. Man lässt 30 min nachrühren, saugt den ausgefallenen Feststoff ab und wäscht mit Ether. Nach Trocknen erhält man 14 g (81%) 4,6-Dichlor-2-pyrimidinylphosphorsäureamiddichlorid (Fp 170 bis 180 °C Zers.). Das Rohprodukt wird ohne weitere Reinigung zur Aminierung eingesetzt.

In 50 ml Ether werden bei -70 bis -40 °C ca. 50 ml Ammoniak einkondensiert. Unter Rühren fügt man bei ca. -60 °C portionsweise 14 g (0,045 mol) 4,6-Dichlor-2-pyrimidinylphosphorsäureamiddichlorid zu. Nach 2 h bei -30 °C lässt man über Nacht bei Raumtemperatur den Ammoniak abdampfen. Der ausgefallene Feststoff wird abgesaugt, mit wenig Wasser und Methanol gewaschen und getrocknet.

Ausbeute: 6,8 g (62 %, Fp: > 250 °C Zers.); ¹³C-NMR (DMSO-d₆): δ[ppm] = 110,9; 160,1 (d, J = 3,6 Hz); 160,9 (d, J = 1,6 Hz); ¹H-NMR (DMSO-d₆): δ[ppm] = 7,21 (s, 1H); 4,26 (s, 5H); ³¹P-NMR (DMSO-d₆): δ[ppm] = 11, 13

### Beispiel 7

### N-(4-Methoxy-6-methyl-2-pyrimidinyl)-phosphorsäuretriamid (Verbindung Nr. 6)

Unter Inertgas werden 5,4 g (0,039 mol) 2-Amino-4-methoxy-6-methylpyrimidin in 30 ml Chloroform suspendiert und anschließend 8,1 g (0,039 mol) PCl₅ zugegeben. Man lässt 15 min bei Raumtemperatur rühren und erhitzt danach 3 h unter Rückfluss. Das Reaktionsgemisch wird auf 5 bis 10 °C abgekühlt und 39 mmol Ameisensäure zugetropft. Man lässt 30 min nachrühren, saugt den ausgefallenen Feststoff ab und wäscht mit Ether. Nach Trocknen erhält man 7,9 g (80%) 4-Methoxy-6-methyl-2-pyrimidinylphosphorsäureamiddichlorid (Fp 155 bis 160 °C Zers.). Das Rohprodukt wird ohne weitere Reinigung zur Aminierung eingesetzt.

In 30 ml Ether werden bei -70 bis -40 °C ca. 30 ml Ammoniak einkondensiert. Unter Rühren fügt man bei ca. -60 °C portionsweise 7,9 g (0,031 mol) 4-Methoxy-6-methyl-2-pyrimidinylphosphorsäureamiddichlorid zu. Nach 2 h bei -30 °C lässt man über Nacht bei Raumtemperatur den Ammoniak abdampfen. Der ausgefallene Feststoff wird abgesaugt, mit wenig Wasser und Methanol gewaschen und getrocknet.

Ausbeute: 3,6 g (53%, Fp: > 270 °C); ¹³C-NMR (DMSO-d₆): δ[ppm] = 23,4; 53,2; 97,2; 159,9 (d, J = 3 Hz); 167,9 (d, J = 1.5 Hz); 169,0; ¹H-NMR (DMSO-d₆): δ[ppm] = 7,89 (s, 1H); 6,13 (s, 1H) ; 3,98 (s, 4H); 3,82 (s, 3H); 2,20 (s, 3H) ³¹P-NMR (DMSO-d₆): δ[ppm] = 13,24

## Patentansprüche

1. N-(2-Pyrimidinyl)(thio)phosphorsäuretriamide der allgemeinen Formel (I) 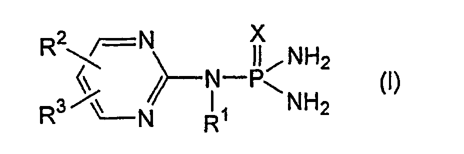 in der
X = Sauerstoff oder Schwefel,
R¹ = Wasserstoff, C₁-C₈-Alkyl oder C₆-C₁₀-Aryl und
R², R³ unabhängig voneinander Wasserstoff, Alkyl, Aryl, Aralkyl, Alkoxy, Halogen, Alkylthio, Alkylamino, Dialkylamino, Cyano, Nitro, wobei die Alkylreste 1-8 C-Atome, die Arylreste 6-10 C-Atome und die Aralkylreste 7-18 C-Atome aufweisen und ggf. substituiert sein können,
bedeuten.

2. N-(2-Pyrimidinyl)(thio)phosphorsäuretriamide nach Anspruch 1, **dadurch gekennzeichnet, dass** die Alkyl- und Arylreste noch einen oder mehrere Rest(e) wie Halogen, Cyano, C₁-C₄-Alkylthio, C₁-C₄-Alkoxy, C₁-C₄-Dialkylamino oder die Nitro-Gruppe als Substituenten aufweisen.

3. N-(2-Pyrimidinyl)phosphorsäuretriamide der allgemeinen Formel (II) 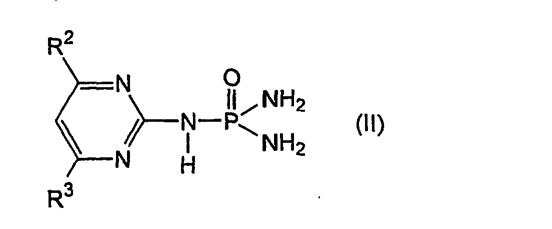 wobei R² und R³ in Anspruch 1 definiert sind.

4. N-(2-Pyrimidinyl)phosphorsäuretriamide gemäß Anspruch 1 oder 3, wobei R² und R³ unabhängig voneinander H, CH₃, OCH₃ oder Cl bedeuten.

5. Verfahren zur Herstellung der N-(2-Pyrimidinyl)(thio)phosphorsäuretriamide nach den Ansprüchen 1 bis 4, **dadurch gekennzeichnet, dass** man
a₁) Phosphorpentachlorid (PCl₅) mit einem 2-Aminopyrimidin in annähernd äquimolarem Verhältnis in einem inerten organischen Lösemittel und unter Schutzgasatmosphäre bei 0 bis 60 °C entsprechend Gleichung (1) zu Verbindungen des Typs (A) reagieren lässt, welche ohne weitere Isolation mit einer annähernd äquimolaren Menge an Ameisensäure und ggf. mit Phosphorpentasulfid zu (Thio-)Phosphorsäureamiddichloriden des Typs (B) umgesetzt werden 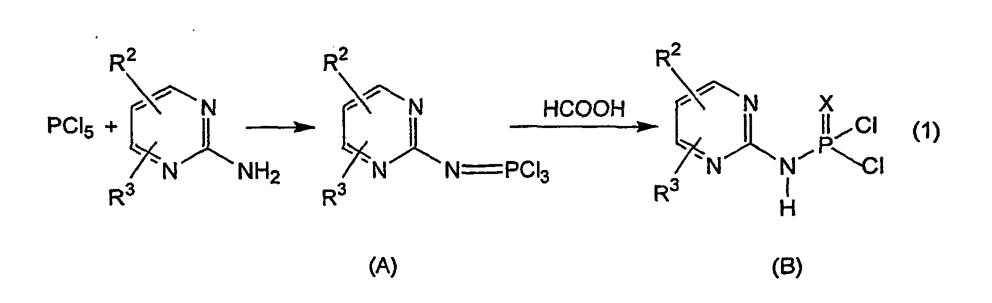 oder
a₂) 2-Aminopyrimidine oder deren Hydrochloride mit einem Überschuß Phosphoroxychlorid (POCl₃) oder Phosphorthiochlorid (PSCl₃) bei Temperaturen von 80 bis 120 °C entsprechend Gleichung (2) zu (Thio-) Phosphorsäureamiddichloriden des Typs (B) umsetzt 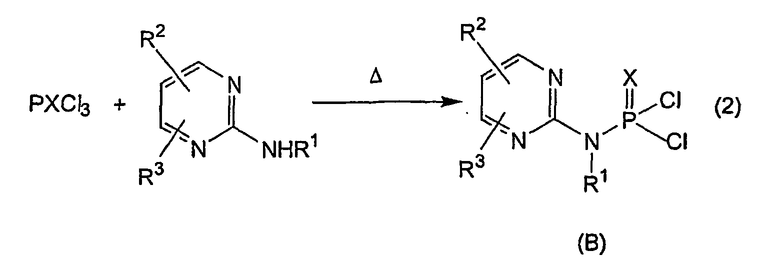 und anschließend
b) die in Stufe a₁) oder a₂) gebildeten Verbindungen des Typs B mit Ammoniak ggf. in einem organischen Lösemittel bei Temperaturen von - 80 bis 20 °C entsprechend Gleichung (3) zum gewünschten Endprodukt reagieren lässt.

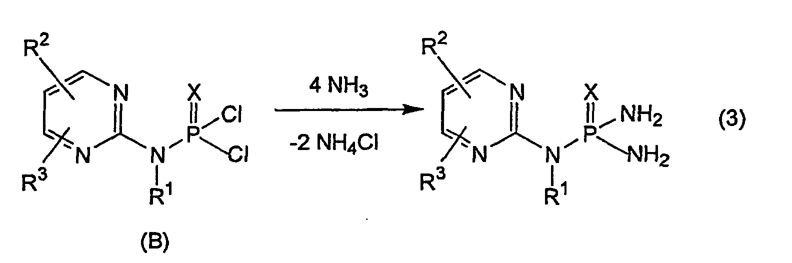

6. Verfahren nach Anspruch 5, **dadurch gekennzeichnet, dass** man die Reaktionsstufe a₁) unter Schutzgasatmosphäre bestehend aus Stickstoff oder Argon durchführt.

7. Verfahren nach Anspruch 5 oder 6, **dadurch gekennzeichnet, dass** in Reaktionsstufe a₁) als organisches Lösemittel Chloroform eingesetzt wird.

8. Verfahren nach den Ansprüchen 5 bis 7, **dadurch gekennzeichnet, dass** die Reaktionsstufe b) in Gegenwart eines organischen Lösemittels ausgewählt aus der Gruppe Dichlormethan, Chloroform, Diethylether oder THF durchgeführt wird.

9. Zusammensetzung umfassend die N-(2-Pyrimidinyl)(thio)-phosphorsäuretriamide nach den Ansprüchen 1 bis 4 und mindestens ein harnstoff-basiertes mineralisches und/oder organisches Düngemittel.

10. Zusammensetzung nach Anspruch 9, **dadurch gekennzeichnet, dass** die N-(2-Pyrimidinyl)(thio)phosphorsäuretriamide in einer Menge von 0,1 bis 30 Gew.-% bezogen auf das Gewicht des harnstoff-basierten Düngemittels eingesetzt werden.

11. Verwendung der N-(2-Pyrimidinyl)(thio)phosphorsäuretriamide nach den Ansprüchen 1 bis 4, zur Regulierung bzw. Hemmung der ureasekatalysierten Harnstoffhydrolyse und zur Verminderung der Ammoniakbelastung.

12. Verwendung nach Anspruch 11, **dadurch gekennzeichnet, dass** die N-(2-Pyrimidinyl)(thio)phosphorsäuretriamide gemeinsam mit harnstoff-basierten mineralischen und/oder organischen Düngemitteln eingesetzt werden.

13. Verwendung nach Anspruch 11, **dadurch gekennzeichnet, dass** die N-(2-Pyrimidinyl)(thio)phosphorsäuretriamide dem Dung bzw. den tierischen Exkrementen in Tierställen zugesetzt werden.

## Claims

1. N-(2-Pyrimidinyl)(thio)phosphoric triamides of the general formula (I) 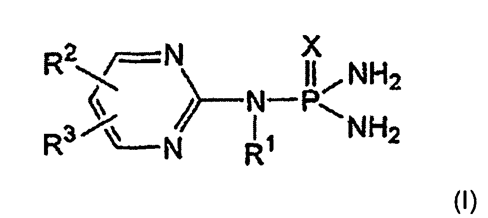 in which
X denotes oxygen or sulphur,
R¹ denotes hydrogen, C₁-C₈-alkyl or C₆-C₁₀-aryl and
R² and R³, independently of one another, denote hydrogen, alkyl, aryl, aralkyl, alkoxy, halogen, alkylthio, alkylamino, dialkylamino, cyano, nitro, it being possible for the alkyl radicals to have 1-8 C atoms, the aryl radicals to have 6-10 C atoms and the aralkyl radicals to have 7-18 C atoms and to be optionally substituted.

2. N-(2-Pyrimidinyl)(thio)phosphoric triamides according to Claim 1, **characterized in that** the alkyl and aryl radical also have one or more radical(s), such as halogen, cyano, C₁-C₄-alkylthio, C₁-C₄-alkoxy, C₁-C₄-dialkylamino or the nitro groups, as substituents.

3. N-(2-Pyrimidinyl)phosphoric triamides of the general formula (II) 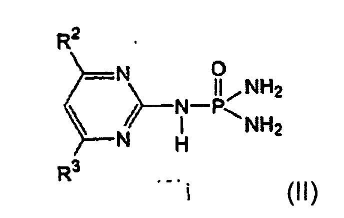 R² and R³ being defined in Claim 1.

4. N-(2-Pyrimidinyl)phosphoric triamides according to Claim 1 or 3, R² and R³, independently of one another, denoting H, CH₃, OCH₃ or Cl.

5. Process for the preparation of the N-(2-pyrimidinyl)(thio)phosphoric triamides according to any of Claims 1 to 4, **characterized in that**
a₁) phosphorus pentachloride (PCl₅) is allowed to react with 2-aminopyrimidine in an approximately equimolar ratio in an inert organic solvent and under an inert gas atmosphere at 0 to 60°C according to equation (1) to give compounds of the type (A), which are reacted, without further isolation, with an approximately equimolar amount of formic acid and optionally with phosphorus pentasulphide to give (thio)phosphoramide dichlorides of the type (B) 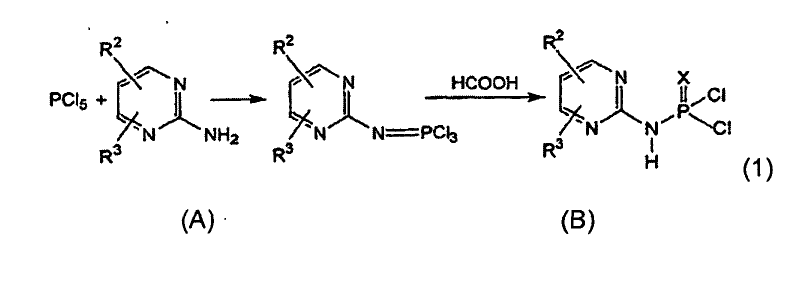 or
a₂) 2-aminopyrimidines or the hydrochlorides thereof are reacted with an excess of phosphoryl chloride (POCl₃) or thiophosphoryl chloride (PSCl₃) at temperatures of 80 to 120°C according to equation (2) to give (thio)phosphoramide dichlorides of the type (B) 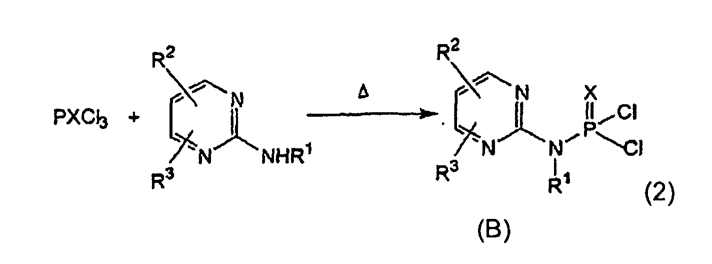 and then
b) the compounds of the type B formed in stage a₁) or a₂) are allowed to react with ammonia, optionally in an organic solvent, at temperatures of -80 to 20°C according to equation (3) to give the desired end product.

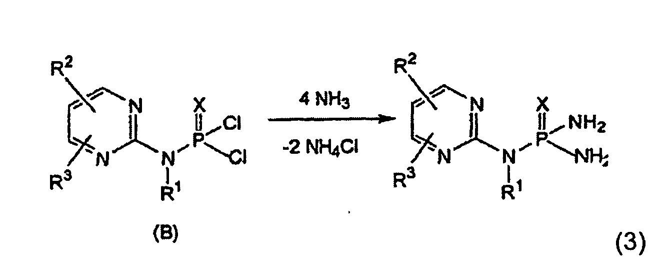

6. Process according to Claim 5, **characterized in that** the reaction stage a₁) is carried out under an inert gas atmosphere consisting of nitrogen or argon.

7. Process according to Claim 5 or 6, **characterized in that** chloroform is used as the organic solvent in reaction stage a₁).

8. Process according to any of Claims 5 to 7, **characterized in that** the reaction stage b) is carried out in the presence of an organic solvent selected from the group consisting of dichloromethane, chloroform, diethyl ether and THF.

9. Composition comprising the N-(2-pyrimidinyl)(thio)phosphoric triamides according to any of Claims 1 to 4 and at least one urea-based mineral and/or organic fertilizer.

10. Composition according to Claim 9, **characterized in that** the N-(2-pyrimidinyl)(thio)phosphoric triamides are used in an amount of 0.1 to 30% by weight, based on the weight of the urea-based fertilizer.

11. Use of the N-(2-pyrimidinyl)(thio)phosphoric triamides according to any of Claims 1 to 4 for regulating or inhibiting urease-catalyzed urea hydrolysis and for reducing the ammonia pollution.

12. Use according to Claim 11, **characterized in that** the N-(2-pyrimidinyl)(thio)phosphoric triamides are used together with urea-based mineral and/or organic fertilizers.

13. Use according to Claim 11, **characterized in that** the N-(2-pyrimidinyl)(thio)phosphoric triamides are added to the dung or to the animal excrements in animal housings.

## Revendications

1. Triamide d'acide N-(2-pyrimidinyl) (thio) phosphorique de formule générale (I) 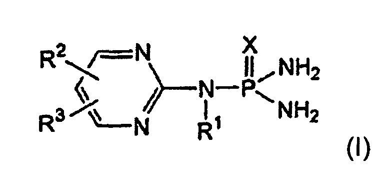 dans laquelle X désigne de l'oxygène ou du souffre,
R¹ désigne de l'hydrogène de l'alkyle en C₁-C₈ ou de l'aryle en C₆-C₁₀ et
R², R³ désignent, indépendamment l'un de l'autre, de l'hydrogène, de l'alkyle, de l'aryle, de l'aralkyle, de l'alcoxy, de l'halogène, de l'alkylthio, de l'alkylamino, du dialkylamino, du cyano, du nitro, les restes d'alkyle présentant 1 à 8 atomes de carbone, des restes d'aryle présentant 6 à 10 atomes de carbone et des restes d'aralkyle présentant 7 à 18 atomes de carbone et le cas échéant pouvant être substitués.

2. Triamide d'acide N-(2-pyrimidinyl) (thio) phosphorique selon la revendication 1 **caractérisé en ce que** les restes alkyles et les restes aryles présentent encore un ou plusieurs restes tels que de l'halogène, du cyano, de l'alkylthio en C₁-C₄, de l'alcoxy en C₁-C₄, du dialkylamino en C₁-C₄ et un groupe nitro comme substituant.

3. Triamide d'acide N-(2-pyrimidinyl) phosphorique de formule générale (II) 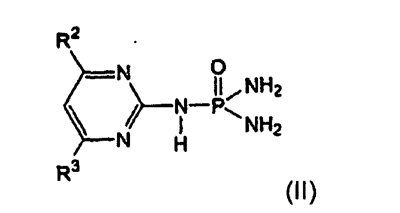 dans laquelle R² et R³ sont définis selon la revendication 1.

4. Triamide d'acide N-(2-pyrimidinyl) (phosphorique) selon la revendication 1 ou 3, dans lequel R² et R³ désignent, indépendamment l'un de l'autre, H, CH₃, OCH₃ ou Cl.

5. Procédé pour la fabrication du triamide d'acide N-(2-pyrimidinyl) (thio) phosphorique selon l'une quelconque des revendications 1 à 4 **caractérisé en ce que** l'on
a₁) fait réagir du pentachlorure de phosphore (PCl₅) avec de la 2-aminopyrimidine dans un rapport équimolaire approchant dans un solvant organique inerte et sous une atmosphère de gaz de protection à 0 jusqu'à 60 °C correspondant jusqu'à une équation (1) équivalente de composés de type (A), lesquels sont convertis sans autre isolation avec une quantité environ équimolaire en acide formique ou le cas échéant avec du pentasulfure de phosphore en dichlorure d'amide d'acide (thio-) phosphorique de type (B). 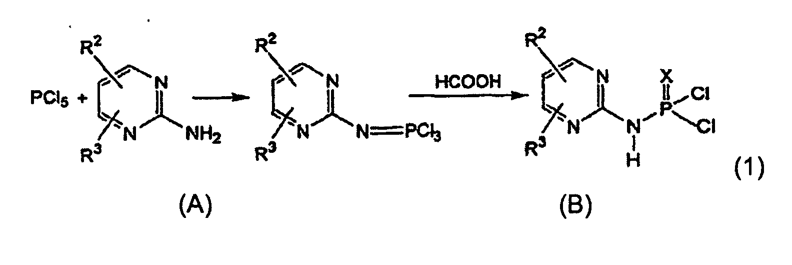 ou
a₂) la 2-aminopyrimidine ou son chlorhydrate avec un excédent de phosphoroxychlorure (POCl₃) ou de phosphore thiochlorure (PSCl₃) à une température de 80 à 120°C se convertit en dichlorure d'amide d'acide (thio-) phosphorique de type (B) d'équation équivalente (2) ; 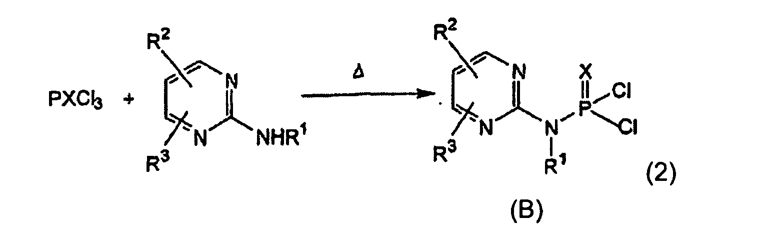 et ensuite
b) les composés formés au cours des étapes a₁) ou a₂) de type B réagissent avec de l'ammoniac le cas échéant dans un solvant organique à une température de -80 à 20 °C de poids équivalent (3) en un produit final désiré.

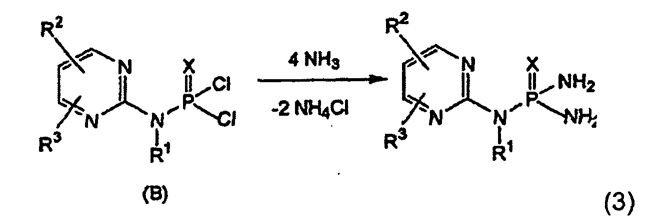

6. Procédé selon la revendication 5, **caractérisé en ce que** l'on exécute l'étape de réaction a₁) dans une atmosphère de gaz de protection se composant d'azote ou d'argon.

7. Procédé selon la revendication 5 ou 6 **caractérisé en ce que** le chloroforme est utilisé dans l'étape de réaction a₁) comme solvant organique.

8. Procédé selon l'une quelconque des revendications 5 à 7 **caractérisé en ce que** l'étape de réaction b) était réalisée en présence d'un solvant organique sélectionné dans le groupe du dichlorométane, du chloroforme, du diéthyle éther ou du THF.

9. Composition comprenant le triamide d'acide N-(2-pyrimidinyl) (thio) phosphorique selon l'une quelconque des revendications 1 à 4 et au moins un fertilisant organique et / ou minérale à base d'urée.

10. Composition selon la revendication 9 **caractérisée en ce que** le triamide d'acide N-(2-pyrimidinyl) (thio) phosphorique est utilisé dans une quantité de 0,1 à 30 % en poids rapporté au poids du fertilisant à base d'urée.

11. Utilisation du triamide d'acide N-(2-pyrimidinyl) (thio) phosphorique selon l'une quelconque des revendications 1 à 4 pour la régulation ou l'inhibition d'une hydrolyse d'urée catalysée par uréase et pour la réduction d'une charge d'ammoniac.

12. Utilisation selon la revendication 11 **caractérisée en ce que** le triamide d'acide N-(2-pyrimidinyl) (thio) phosphorique est utilisé conjointement avec des fertilisants organiques ou / et minérales à base d'urée.

13. Utilisation selon la revendication 11 **caractérisée en ce que** le triamide d'acide N-(2-pyrimidinyl) (thio) phosphorique est ajouté aux fertilisants ou aux excréments animaux dans les étables.
